# FASCICULE DE BREVET EUROPEEN

(11) **EP 1 927 206 B1**
(45) Date de publication et mention de la délivrance du brevet: **14.08.2019**
(21) Numéro de dépôt: 06806794.1
(22) Date de dépôt: 21.09.2006
(51) Int. Cl.: H04H 20/72

(54) **MESURER LA SYNCHRONISATION D'EMETTEURS DANS UN RESEAU A FREQUENCE UNIQUE A L'AIDE D'UNE REFERENCE EXTERNE**
MESSEN DER SYNCHRONISATION DER SENDER IN EINEM GLEICHWELLENNETZ MITTELS EINER EXTERNEN REFERENZ
DATA BROADCASTING METHOD FOR MEASURING THE SYNCHRONIZATION OF TRANSMITTERS, CORRESPONDING SYSTEM, TRANSMITTER AND PROGRAMME

(30) Priorité: 23.09.2005 FR 0509793
(43) Date de publication de la demande: 04.06.2008
(73) Titulaire: TDF, 75732 Paris Cedex 15 (FR)
(72) Inventeur: LESAFFRE, Jean-Claude, 35310 Cintre (FR); DUPAIN, Pascal, 35131 Pont-Pean (FR); TRAVERS, Jean-François, 35740 Pace (FR)
(74) Mandataire: Vidon Brevets & Stratégie
(86) Numéro de dépôt international: PCT/EP2006/066597
(87) Numéro de publication internationale: WO 2007/036485

(56) Documents cités:
- EP-A- 1 063 799
- EP-A- 1 278 319
- EP-A- 1 469 646

## Description

### 1. Domaine de l'invention

Le domaine de l'invention est celui de la transmission et de la diffusion d'informations dans un réseau de communication comprenant une pluralité d'émetteurs.

Plus précisément, l'invention concerne une technique de mesure de la synchronisation des différents émetteurs d'un tel réseau de communication. Elle s'applique plus particulièrement, mais non exclusivement, au domaine de la télévision numérique terrestre, ou TNT.

### 2. Solutions de l'art antérieur

On s'attache plus particulièrement dans la suite de ce document à décrire la problématique existante dans le domaine des réseaux de diffusion de télévision numérique terrestre, à laquelle ont été confrontés les inventeurs de la présente demande de brevet. L'invention ne se limite bien sûr pas à ce domaine particulier d'application, mais présente un intérêt pour toute technique de transmission ou de diffusion d'informations devant faire face à une problématique proche ou similaire.

Des réseaux de diffusion de télévision numérique terrestre, encore appelée TNT, mettant en oeuvre la norme DVB-T ("Digital Video Broadcasting - Terrestrial" pour "diffusion vidéo numérique terrestre"), sont aujourd'hui déployés en France, en Europe, et dans plusieurs autres Etats du monde. Dans la grande majorité, ces réseaux sont de type MFN ("Multi Frequency Network" pour "réseau multi fréquences"), ce qui signifie que les différents émetteurs d'un tel réseau fonctionnent à des fréquences distinctes. A l'inverse, dans certaines zones géographiques, les réseaux sont de type SFN ("Single Frequency Network" pour "réseau à fréquence unique"), ou isochrones, ce qui signifie que les différents émetteurs doivent être synchronisés en temps et en fréquence.

En effet, le principe de fonctionnement de tels réseaux SFN peut consister à émettre un même signal depuis au moins deux sites géographiques distincts sur chacun desquels est implanté un émetteur. L'objectif recherché est alors d'additionner la contribution de ces deux signaux en réception, ce qui nécessite qu'ils soient reçus au même instant, dans un intervalle de garde qui est fonction du profil de modulation et proportionnel à la largeur du temps symbole, et à la même fréquence, pour éviter qu'ils ne se perturbent l'un l'autre. En fonction de l'éloignement géographique du récepteur à chacun des deux émetteurs, il est donc parfois nécessaire de tenir compte des temps de trajets différents des signaux, et plus généralement du canal de propagation et des perturbations qu'il est susceptible d'introduire.

En raison de cet impératif de synchronisation temporelle et fréquentielle des différents émetteurs, la mise en oeuvre de tels réseaux SFN s'avère particulièrement délicate.

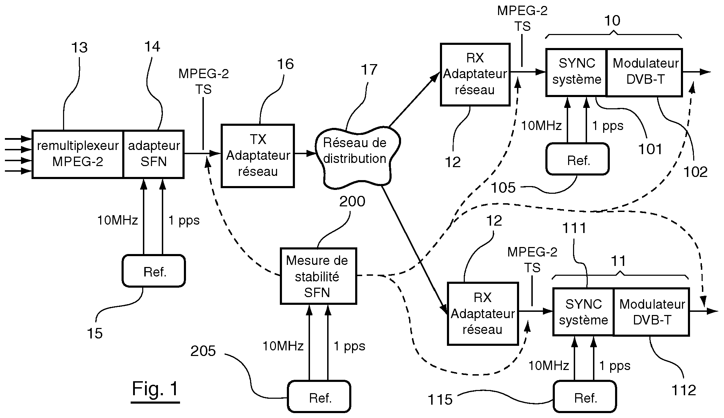

Plusieurs procédés ont à ce jour été proposés pour permettre de synchroniser des signaux DVB-T en sortie des émetteurs d'un réseau de diffusion TNT, et reposent pour la plupart sur un marquage temporel des trames de données à émettre, comme présenté ci-dessous en relation avec la figure 1. Un tel procédé de marquage est normalisé, et l'on pourra se référer pour plus d'informations sur ce procédé à la norme référencée ETSI TS 101 191.

La figure 1 illustre, selon cette norme, un synoptique d'un système de diffusion de télévision numérique terrestre de type SFN mettant en oeuvre une diffusion des données au format MPEG-2-TS ("Motion Picture Expert Group - Transport Stream"). On notera que les éléments référencés 200 et 205 sur cette figure ne sont pas connus de l'art antérieur mais font partie intégrante de la présente invention et seront décrits plus en détail en relation avec un mode de réalisation du procédé de l'invention.Sur cette figure 1, on a représenté deux émetteurs secondaires (encore appelés ré-émetteurs, ou plus simplement émetteurs) 10 et 11, comprenant chacun un équipement de synchronisation (SYNC system) 101, 111, et un modulateur DVB-T 102, 112. L'équipement de synchronisation 101, 111 est alimenté par deux signaux de référence fréquentielle et temporelle, par exemple un signal correspondant à une impulsion par seconde, ou 1 PPS (pour "Pulse Per Second") et un signal à 10MHz résultant du 1 PPS. Ces signaux peuvent être issus de tout système de référence 15, 105 et 115 fiable, et par exemple du système de positionnement mondial GPS ("Global Positioning System").

Les données à diffuser par chacun de ces émetteurs secondaires 10, 11, sont reçues sous la forme d'un flux de transport de type MPEG-2 (MPEG-2 TS pour "MPEG-2 Transport Stream"), issu d'un récepteur 12 jouant également le rôle d'adaptateur de réseau ("RX Network Adapter").

En amont, à l'autre bout de la chaîne de diffusion, le flux MPEG-2 TS de données à transmettre est construit par un multiplexeur MPEG-2 référencé 13, qui réalise la mise en trame des données. Un tel multiplexeur MPEG-2 se situe par exemple dans une tête nationale de réseau, à partir de laquelle sont ensuite diffusées par satellite les données à émettre par chacun des ré-émetteurs 10, 11, correspondant à des têtes régionales, ou locales, du réseau. Après multiplexage MPEG-2 13, les données sont traitées par un adaptateur SFN 14, qui réalise le marquage temporel des trames à partir du même système de référence temporel et fréquentiel 15 que celui 105, 115 qui est utilisé par les équipements de synchronisation 101, 111 des émetteurs 10 et 11. L'adaptateur SFN 14 est le pendant, à l'émission, de l'équipement de synchronisation 101, 111 en réception. Ainsi, l'adaptateur SFN est aussi alimenté par un signal de référence fréquentielle à 10 MHz et par un signal de référence temporel à une impulsion par seconde.

En sortie de l'adaptateur SFN 14, le flux de données est donc de type MPEG-2 TS : il est alors transmis par un adaptateur réseau 16 ("TX Network Adapter"), et véhiculé, par l'intermédiaire d'un réseau de distribution 17 (par exemple un réseau de distribution par satellite), jusqu'aux récepteurs 12, afin d'être mis à la disposition des émetteurs secondaires (encore appelés ré-émetteurs) 10 et 11.

Plus précisément, le marquage temporel réalisé par l'adaptateur SFN 14 consiste d'une part, à construire des méga-trames, encore appelées super-trames, correspondant chacune à 8 trames DVB-T en mode 8K, ou à 32 trames DVB-T en mode 2K, et d'autre part, à insérer en un endroit quelconque de chacune de ces super-trames, un paquet d'initialisation de méga-trame, encore appelé "Mega-frame Initialisation Packet", ou MIP.

Le paquet MIP de la super-trame d'indice M, noté MIP_{M}, est identifié par son propre PID=0x15 (pour "Packet Identifier", soit "identifiant de paquet") et comprend notamment :
- un mot de deux octets appelé "pointer", qui donne le nombre de paquets de données entre le MIP courant et le premier paquet de la super-trame suivante ;
- un mot de trois octets appelé "Synchronisation_time_stamp", ou STS, qui donne le nombre de périodes de 10 MHz entre la dernière impulsion 1 PPS de référence précédent le début de la super-trame d'indice M+1 et le début de cette super-trame suivante d'indice M+1 (identifié par le premier bit du premier paquet de cette super-trame).

La technique actuelle pour assurer la synchronisation des émetteurs dans un tel réseau SFN repose sur des dispositifs de mesure temporelle différentielle de signaux, permettant de mesurer l'écart entre les signaux des différents émetteurs secondaires, et de vérifier la stabilité du réseau, après qu'il ait été correctement réglé (en absolu).

Le principe de fonctionnement de tels dispositifs, utilisés notamment dans les systèmes de type DAB ("Digital Audio Broadcasting" pour "diffusion audio numérique"), repose sur l'analyse des variations temporelles des pics des réponses impulsionnelles associées à chaque émetteur : la réponse impulsionnelle après calibrage est mémorisée et sert de référence, la technique consiste à émettre une alarme lorsque le pic associé à un émetteur donné dérive au-delà d'un gabarit temporel prédéterminé par rapport à la référence.

Indépendamment de cette méthode de synchronisation des ré-émetteurs, on connaît par ailleurs plusieurs méthodes de mesure des paramètres de la signalisation MIP (définis par la norme ETSI TS 101 191), qui sont décrites en détail dans la norme ETSI TR 101 290 (voir notamment le §9.20).

Ces différentes méthodes de mesure renseignent sur la cohérence, la syntaxe et la sémantique des informations de synchronisation contenues dans le signal qui alimente les émetteurs, dans la mesure où elles permettent de détecter quatre erreurs principales appelées :
- MIP_timing_error, qui permet de vérifier si les champs STS sont corrects ;
- MIP_structure_error, qui permet de vérifier la sémantique de la partie utile du paquet MIP ;
- MIP_pointer_error, qui permet de vérifier s'il n'y a pas eu de décalage entre la valeur du "pointer" et l'écart réel du paquet courant avec le début d'une super trame. Un tel défaut peut en effet être inséré lors d'un remultiplexage du flux TS ;
- MIP_ts_rate_error, qui permet de vérifier si le débit des paquets MIP est cohérent avec les paramètres de modulation que l'on trouve dans le champs TPS.

### 3. Inconvénients de l'art antérieur

Ces différentes méthodes de mesure permettent de définir un premier niveau de métrologie du système de diffusion de données considéré. Cependant, elles présentent divers inconvénients.

Ainsi, le test MIP_timing_error qui repose sur une analyse récursive des "Synchronisation Time Stamp" STS pour détecter d'éventuelles erreurs de timing (c'est-à-dire de minutage ou de chronométrage), ne permet de vérifier, ni la bonne synchronisation, ni la stabilité d'un réseau SFN par rapport à une référence externe de type UTC ("Universal Time Coordinated" pour "temps universel coordonné"). En effet, les modulateurs DVB-T des ré-émetteurs, encore appelés émetteurs secondaires, utilisent la signalisation MIP et un signal de référence temporelle (par exemple un signal 1 PPS) identique à celui qui est utilisé au niveau de l'émetteur primaire, pour réaliser une analyse comparative de la signalisation MIP et des "Synchronisation Time Stamp" STS et prendre la décision de retarder plus ou moins la trame reçue, en sortie de l'émetteur. Ainsi, cette méthode déterministe, qui repose sur la même référence temporelle 1PPS qu'à l'émission primaire, assure la synchronisation temporelle des signaux en sortie des émetteurs.

Cependant, elle ne permet pas de surveiller l'éventuelle dérive temporelle générale des émetteurs ou ré-émetteurs d'un tel réseau de diffusion.

La technique de mesure de stabilité du réseau de l'art antérieur, reposant sur une mesure temporelle différentielle des signaux, présente quant à elle pour inconvénient d'être particulièrement difficile à mettre en oeuvre.

En effet, le dispositif de mesure qui est utilisé doit pouvoir capter séparément, en un même point du réseau, les signaux de chacun des émetteurs secondaires, ce qui n'est pas toujours possible, selon la configuration de terrain. Il est possible que dans la zone de réception commune à plusieurs émetteurs, l'angle de réception entre les deux émetteurs soit trop faible pour pouvoir séparer chacun des signaux ou que les échos ne permettent pas au récepteur de se caller séparément sur chacun des émetteurs.

En outre, parmi les différents signaux reçus par le dispositif de mesure différentielle, il est nécessaire de pouvoir identifier avec certitude le signal émis par un émetteur secondaire donné, sans le confondre, ni avec les signaux émis par les autres émetteurs secondaires, ni avec d'éventuels échos qui pourraient perturber l'accrochage.

Enfin, la mesure réalisée se fait à partir des signaux reçus par le dispositif, c'est-à-dire dégradés par le canal de transmission, ce qui en réduit la qualité et la précision.

Même en passant outre ces différentes difficultés, force est de constater que cette technique de mesure permet de vérifier la synchronisation différentielle des signaux issus des différents émetteurs secondaires du réseau, mais pas la synchronisation de chacun de ces émetteurs avec une référence externe de type UTC ou GPS. En effet, cette technique repose sur le postulat d'un réglage correct initial du réseau, sans tenir compte d'éventuels phénomènes de dérives ultérieurs. Elle fait aussi l'hypothèse qu'au moins un des émetteurs soit correctement synchronisé.

En conclusion, un inconvénient majeur des différentes techniques de l'art antérieur est qu'elles ne permettent pas de s'assurer simultanément de la synchronisation correcte des émetteurs, non seulement les uns par rapport aux autres, mais également de chacun par rapport à une référence de synchronisation externe au réseau.

### 4. Objectifs de l'invention

L'invention a notamment pour objectif de pallier ces inconvénients de l'art antérieur.

Plus précisément, un objectif de l'invention est de fournir une technique de diffusion de données dans un réseau comprenant une pluralité d'émetteurs, permettant de s'assurer de la synchronisation correcte de chacun de ces émetteurs par rapport à une référence de synchronisation externe.

Un autre objectif de l'invention est de proposer une telle technique qui permette en outre de s'assurer de la synchronisation correcte des différents émetteurs les uns par rapport aux autres (ou plus généralement du respect d'un décalage temporel déterminé entre ces différents émetteurs).

L'invention a encore pour objectif de fournir une telle technique qui soit simple et peu coûteuse à mettre en oeuvre.

L'invention a également pour objectif de proposer une telle technique qui soit particulièrement bien adaptée aux réseaux de type SFN, et notamment aux réseaux de télévision numérique terrestre tels que présentés ci-dessus ou tout autre réseau s'appuyant sur la norme DVB. Dans ce cas particulier, l'invention a pour objectif de fournir une telle technique de métrologie qui exploite avantageusement les marqueurs STS prescrits par la norme ETSI TS 101 191.

### 5. Exposé de l'invention

Ces objectifs, ainsi que d'autres qui apparaîtront par la suite, sont atteints à l'aide d'un procédé de diffusion de données dans un réseau de diffusion comprenant au moins deux émetteurs distincts, lesdites données étant organisées en trames de données successives construites à partir d'un premier signal de référence temporelle externe, dit premier signal de référence externe.

Selon l'invention, un tel procédé met en oeuvre, au niveau de l'un au moins desdits émetteurs, des étapes de :
- génération d'un signal de référence reconstitué à partir d'au moins certaines données desdites trames à émettre ;
- comparaison dudit signal de référence reconstitué et d'un second signal de référence externe, afin de déterminer une valeur de décalage temporel entre ledit signal de référence reconstitué et ledit second signal de référence externe ;
- vérification que ladite valeur de décalage temporel déterminée est sensiblement égale à une valeur de décalage temporel de référence imposée pour ledit émetteur.

Ainsi, l'invention repose sur une approche tout à fait nouvelle et inventive de la vérification de la stabilité temporelle d'un réseau de diffusion de données. En effet, alors que les différentes techniques antérieures reposaient sur la simple vérification de la synchronisation des différents émetteurs du réseau entre eux, l'invention propose de s'assurer de la bonne synchronisation d'un émetteur donné par rapport à une référence externe (appelée ici second signal de référence externe). La vérification, effectuée en parallèle pour chacun des émetteurs du réseau, permet par extension, de s'assurer également de la bonne synchronisation de l'ensemble du réseau d'émetteurs. Le principe de la mesure, qui repose sur une simple comparaison de signaux, est de réalisation très facile, et permet d'atteindre une grande précision de résultat.

En outre, alors que la plupart des techniques antérieures proposaient de réaliser une vérification a posteriori, c'est-à-dire en réception, de la synchronisation des signaux issus des différents émetteurs, l'invention propose une approche tout à fait nouvelle consistant à réaliser une vérification a priori de la synchronisation, au niveau de l'émetteur lui-même. De cette façon, en scrutant à l'émission la stabilité des trames émises, on est capable de localiser immédiatement la source d'un éventuel problème de synchronisation ou de dérive.

Enfin, contrairement aux techniques de l'art antérieur, la technique de l'invention repose sur une analyse du contenu des trames de données, qu'elle utilise pour reconstruire un signal de référence reconstitué, à comparer avec le signal de référence externe utilisé lors de la mise en trames initiale.

La valeur de décalage temporel de référence imposée pour un émetteur est égale au retard, encore appelé délai, apporté par l'émetteur dans le réseau. Ce retard peut être réglé, en fonction de la configuration du terrain et du niveau de synchronisation ou de décalage souhaité pour les différents émetteurs du réseau.

Comme on le verra plus en détail par la suite, les premier et second signaux de référence externe peuvent être ou non identiques.

Dans un mode de réalisation préférentiel de l'invention, ledit réseau de diffusion est un réseau de type SFN, dans lequel chacun desdits émetteurs utilise une même fréquence d'émission desdites données. C'est en effet dans cette configuration particulière que l'invention trouve particulièrement son intérêt.

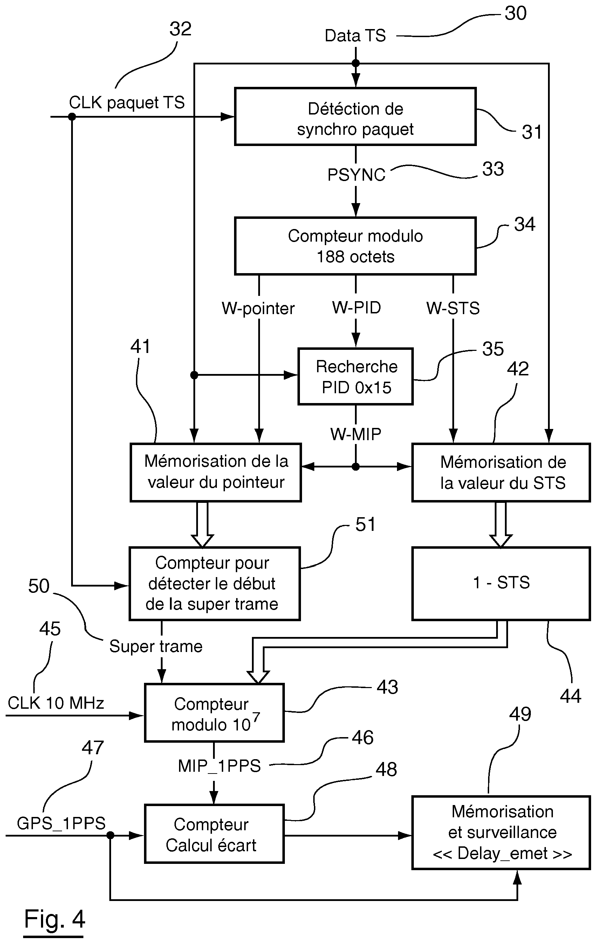

Selon une caractéristique avantageuse de l'invention, ladite valeur de décalage temporel prédéterminée est sensiblement nulle. Ce cas se présente lorsque l'émetteur n'apporte aucun retard supplémentaire en sortie de l'étage de synchronisation, comme détaillé ci-après en relation avec la figure 4.

Selon une variante avantageuse, ladite valeur de décalage temporel prédéterminée est sensiblement égale pour au moins deux émetteurs dudit réseau, de façon à assurer le synchronisme desdits émetteurs.

Préférentiellement, ledit premier et/ou second signal de référence externe est un signal comprenant une impulsion par seconde, issu du système de positionnement mondial GPS. Il peut également s'agir de toute autre source de référence fiable et peu sujette aux dérives.

Avantageusement, un tel procédé de diffusion comprend une étape d'émission d'une alarme si, lors de ladite étape de vérification, on détermine que ladite valeur de décalage temporel déterminée n'est pas sensiblement égale à ladite valeur de décalage temporel de référence.

On détecte ainsi rapidement toute perte de synchronisation, ou toute dérive du premier signal de référence externe, ce qui permet de remédier rapidement au problème, sans perte d'informations nuisible à la qualité du réseau.

De manière préférentielle, lesdits premier et second signaux de référence externes sont distincts, et ladite étape de vérification permet de détecter une dérive temporelle dudit premier signal de référence externe par rapport audit second signal de référence externe. On rappelle que le premier signal de référence externe est la référence temporelle utilisée en amont du réseau, lors de la mise en trame des données, ou par les équipements de synchronisation des émetteurs. Il est en effet nécessaire que le second signal de référence externe provienne d'un équipement différent de celui qui génère le premier signal de référence externe si l'on veut détecter une désynchronisation, liée à une perte de signal de référence se traduisant par un glissement temporel du premier signal de référence externe.

Selon une caractéristique avantageuse, lesdites trames de données sont organisées, au sein d'un flux de type MPEG-TS, en au moins une super-trame, chaque super-trame comprenant un paquet d'initialisation de super-trame, et ledit signal de référence reconstitué est généré à partir d'au moins un paramètre dudit paquet d'initialisation de super-trame.

Préférentiellement, ledit réseau de diffusion est un réseau de type DVB-T.

L'invention concerne aussi un produit programme d'ordinateur téléchargeable depuis un réseau de communication et/ou stocké sur un support lisible par ordinateur et/ou exécutable par un microprocesseur, comprenant des instructions de code de programme pour la mise en oeuvre d'au moins une étape du procédé de diffusion décrit précédemment.

L'invention concerne également un émetteur de données dans un réseau de diffusion comprenant au moins deux émetteurs distincts, lesdites données étant organisées en trames de données successives construites à partir d'un premier signal de référence temporelle externe, dit premier signal de référence externe. Selon l'invention, un tel émetteur comprend :
- des moyens de génération d'un signal de référence reconstitué à partir d'au moins certaines données desdites trames à émettre ;
- des moyens de comparaison dudit signal de référence reconstitué et d'un second signal de référence externe, afin de déterminer une valeur de décalage temporel entre ledit signal de référence reconstitué et ledit second signal de référence externe ;
- des moyens de vérification que ladite valeur de décalage temporel déterminée est sensiblement égale à une valeur de décalage temporel de référence imposée pour ledit émetteur.

Plus généralement, l'émetteur de l'invention comprend l'ensemble des moyens permettant la mise en oeuvre du procédé de diffusion de données décrit précédemment.

L'invention concerne enfin un système de diffusion de données mettant en oeuvre un réseau de diffusion comprenant au moins deux émetteurs distincts, lesdites données étant organisées en trames de données successives construites à partir d'un premier signal de référence temporelle externe, dit premier signal de référence externe.

Selon l'invention, un tel système comprend, au niveau de chacun desdits émetteurs, des moyens de :
- génération d'un signal de référence reconstitué à partir d'au moins certaines données desdites trames à émettre ;
- comparaison dudit signal de référence reconstitué et d'un second signal de référence externe, afin de déterminer une valeur de décalage temporel entre ledit signal de référence reconstitué et ledit second signal de référence externe ;
- vérification que ladite valeur de décalage temporel déterminée est sensiblement égale à une valeur de décalage temporel de référence imposée pour ledit émetteur,
de façon à assurer une synchronisation et/ou un déphasage prédéterminés desdits émetteurs dans ledit système de diffusion. Plus généralement, un tel système comprend l'ensemble des moyens nécessaires à la mise en oeuvre du procédé de diffusion décrit précédemment.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1, déjà décrite en relation avec l'art antérieur, présente un synoptique d'un système de diffusion de télévision numérique terrestre de type SFN mettant en oeuvre une diffusion des données au format MPEG-2;
- la figure 2 illustre, sous forme de diagramme des temps, le principe de la synchronisation SFN mise en oeuvre dans le système de la figure 1 ;
- les figures 3A et 3B présentent les diagrammes des temps illustrant le fonctionnement des registres "pointer" et "synchronisation time stamp" des paquets MIP ;
- la figure 4 décrit le système à mettre en oeuvre pour effectuer une mesure de synchronisation.

### 7. Description d'un mode de réalisation de l'invention

Le principe général de l'invention repose sur la reconstruction, au niveau des émetteurs d'un réseau de diffusion, d'un signal de référence reconstitué, à partir du contenu de trames de données à émettre, et sur la comparaison de ce signal de référence reconstitué à un signal de référence externe utilisé lors de la mise en trame, afin de mesurer la stabilité et la synchronisation de l'émetteur considéré par rapport à cette référence externe. Par extension, cette technique permet de s'assurer de la synchronisation correcte des différents émetteurs les uns par rapport aux autres.

On s'attache, dans toute la suite de ce document, à décrire un mode de réalisation particulier de l'invention dans le cas d'un réseau de diffusion de télévision numérique terrestre de type SFN et mettant en oeuvre la norme DVB-T. L'invention ne se limite bien sûr pas à cette application particulière, mais présente un intérêt dans tous les cas où il est nécessaire de s'assurer de la synchronisation correcte d'émetteurs dans un réseau de diffusion, et de la stabilité temporelle du réseau.

En se référant à la figure 1, déjà décrite précédemment, la technique de l'invention permet d'effectuer des mesures de synchronisme et/ou de stabilité sur les signaux MPEG-TS que l'on peut trouver entre l'adaptateur SFN 14 et l'adaptateur de réseau 16, ou entre le récepteur 12 et l'équipement de synchronisation 101, 111. Elle s'applique principalement en sortie d'un démodulateur DVB-T recevant les signaux émis par le modulateur DVB-T 102, 112 (intégré ou pas à l'émetteur).

La technique de l'invention consiste à réaliser une analyse en absolu, par rapport à une référence externe de type 1PPS. Un module de mesure de stabilité SFN 200 est alimenté par deux signaux 1 pps et 10 MHz issus d'une source de référence 205. La technique de l'invention permet donc de tester :
- d'une part, indirectement :
   - le MIP_timing_error, i.e. les erreurs de chronométrage MIP ;
   - le MIP_pointer_error, i.e. les erreurs détectées à partir du champ "pointer" des paquets MIP ;
   - une désynchronisation de la source de référence 15, 105 et 115 si le pilote de la métrologie 205 est différent de la référence 15, 105 et 115.
- d'autre part, directement :
   - le retard entre le signal de référence reconstitué MIP-1PPS et le GPS-1PPS de référence absolue 205 ;
   - la stabilité de la synchronisation du signal à mesurer.

Cette technique permet donc de mesurer simultanément la stabilité temporelle du marquage MIP d'un signal DVB-T (dans l'exemple particulier de réalisation décrit ici) et la stabilité temporelle d'un signal DVB-T en sortie d'un émetteur.

En outre, cette mesure de stabilité peut être réalisée en sortie de chacun des émetteurs du réseau, ce qui permet de vérifier que tous les émetteurs d'un réseau SFN sont synchrones.

Enfin, cette technique de mesure en absolu permet de réaliser des mesures sur le signal source en entrée ou sortie d'un émetteur. Il n'est donc pas nécessaire de trouver un site géographique où l'on reçoive l'ensemble des signaux issus des différents émetteurs pour effectuer une mesure différentielle de la stabilité. Cette technique est donc de mise en oeuvre particulièrement simple.

On notera que, sur la figure 1, le premier signal de référence externe 15, 105, 115 utilisé pour la mise en trame des données peut être ou non identique au second signal de référence externe 205 utilisé pour la mesure de stabilité 200 du réseau SFN de l'invention. Dans le cas où ces signaux sont distincts, la mesure 200 de l'invention permet avantageusement de mesurer une éventuelle dérive temporelle des premiers signaux de référence externe 15, 105, 115.

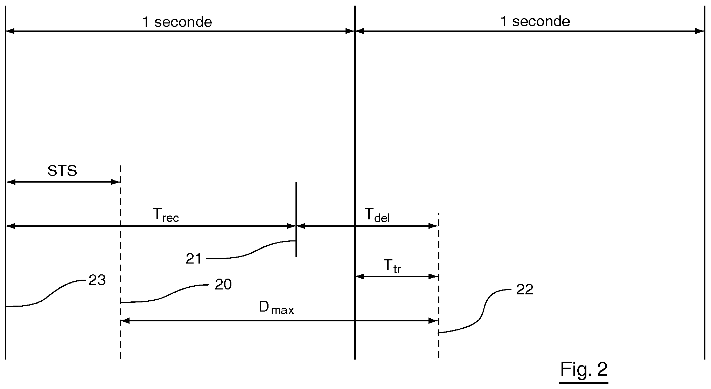

On présente, en relation avec la figure 2, une description fonctionnelle de la synchronisation SFN, telle que prévue par la norme ETSI TS 101 191.

Cette synchronisation repose sur une référence temporelle à 1 PPS issue du système GPS : la figure 2 présente donc deux intervalles de temps successifs présentant chacun une durée d'une seconde (1 s). Comme indiqué précédemment, la durée STS correspond au nombre de périodes de 10 MHz (fréquence d'un oscillateur local synchronisé) entre la dernière impulsion 1 PPS de référence 23 précédent le début de la super-trame d'indice M et le premier bit du premier paquet de cette super-trame d'indice M. Ce premier bit est donc émis en sortie de l'adaptateur SFN 14 à l'instant référencé 20 sur la figure 2, qui correspond à l'instant d'émission de la super-trame M.

Cette super-trame d'indice M est ensuite reçue par l'émetteur 10 ou 11 à l'instant référencé 21, c'est-à-dire au bout d'un temps T_{rec} après la dernière impulsion 1 PPS de référence.

Le retard Dₘₐₓ désigne le temps maximum qui peut s'écouler entre l'instant effectif d'émission de la super-trame d'indice M et l'instant effectif d'émission 22 de la super-trame suivante d'indice M+1 (i.e. du premier paquet de transport de cette super-trame M+1) par l'adaptateur SFN 14.

On notera que, la fréquence de référence étant de 10MHz, on a :
Tₜᵣ=(STS+Dₘₐₓ) modulo 10⁷ et T_{del}=(STS+Dₘₐₓ-T_{rec}) modulo 10⁷.

Le procédé mis en oeuvre dans le cadre de l'invention consiste, non pas à effectuer des calculs et mesures comparatives entre le 1 PPS de référence absolue 205 et la signalisation des paquets MIP, mais à régénérer un signal que l'on pourrait appeler 1 PPS', à partir des seuls paramètres contenus dans la signalisation MIP, puis à mesurer l'écart temporel entre la référence externe 1 PPS 205 et ce signal 1 PPS' reconstitué à partir de la signalisation MIP.

Un écart temporel constant entre ces deux signaux permet de vérifier qu'il n'y a pas d'erreur de type MIP_timing_error, ni de type MIP_pointer_error, mais aussi que le signal est synchrone par rapport à la référence absolue 1 PPS 205.

Dans la pratique, les gigues apportées par les réseaux de transport des signaux entraînent une gigue du signal 1 PPS' reconstitué. La vérification de la synchronisation proposée par l'invention consiste donc à vérifier que l'écart temporel entre les signaux 1 PPS et 1 PPS' reste à peu près constant, dans un gabarit temporel à définir en fonction de la marge acceptable. Par exemple, pour un intervalle de garde Δ d'une durée de 32 µs, la marge d'erreur tolérée peut être de 10% de cet intervalle de garde, soit d'environ 3 µs. Cette marge d'erreur peut être fixée par chaque opérateur de réseau.

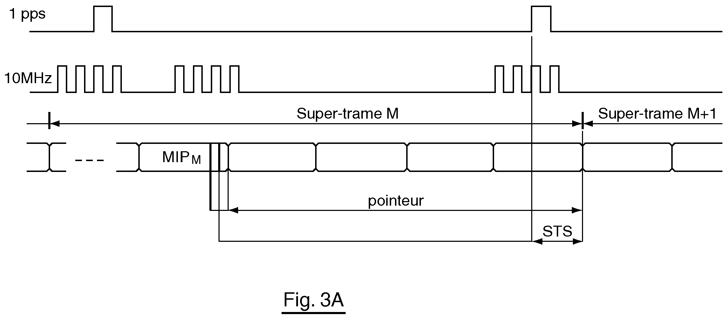

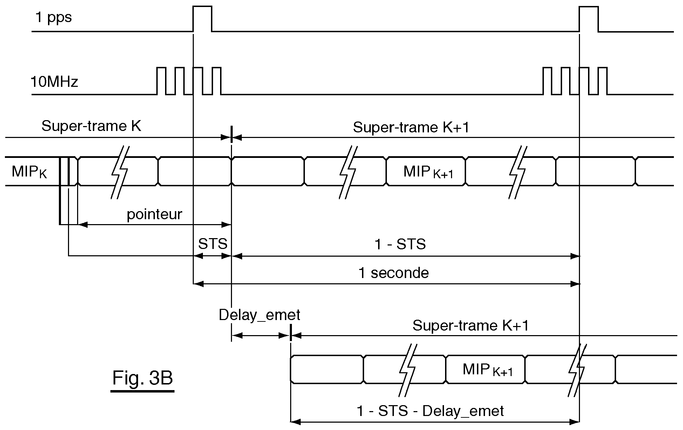

On présente désormais, en relation avec les figures 3A et 3B, un diagramme des temps illustrant la signification des registres "pointer" et STS de la signalisation MIP, telle que présentée précédemment dans ce document.

La figure 3A concerne plus particulièrement la génération du signal, au niveau de l'adaptateur SFN 14, et la figure 3B, la réception par les émetteurs 10 et 11. On rappelle que "pointer" est un mot de deux octets qui renseigne sur le nombre de paquets entre le MIP courant et le premier paquet de la super-trame suivante, et que "STS" est un mot de trois octets qui renseigne sur le nombre de périodes de 10 MHz entre la dernière impulsion 1 PPS de référence précédent le début de la super-trame d'indice M+1 et le début de cette super-trame d'indice M+1.

Une super-trame DVB-T dure entre 0,502656 s et 0,812373 s, selon le nombre de points (2K ou 8K) de la FFT ("Fast Fourier Tranform" pour "transformée de Fourier rapide") qui est réalisée, la valeur de l'intervalle de garde (1/4, 1/8, 1/16 ou 1/32 de la longueur d'un symbole OFDM), et la valeur de la bande passante, qui peut être de 6, 7 ou 8 MHz d'après les prescriptions de la norme. Toutes les super-trames (encore appelées "mega-frames") ne contiennent donc pas nécessairement une impulsion 1 PPS de référence (encore appelée ici GPS_1PPS, puisqu'elle peut être issue du système de positionnement GPS). En revanche, il y a toujours au moins une impulsion GPS_1PPS dans deux méga-trames consécutives.

La figure 4 décrit le système à mettre en oeuvre pour effectuer une mesure de synchronisation selon l'invention.

A partir du flux de données DATA TS 30 et de l'horloge de paquet TS 32, on réalise une détection de synchronisation de paquet 31, délivrant un signal PSYNC 33, qui alimente un compteur modulo 188 octets 34.

Chaque paquet de signalisation MIP donne donc, après identification (par recherche de PID 0x15 35) et décodage, deux valeurs notées "W-pointer" et "W-STS", qui peuvent être mémorisées dans des registres 41, 42 correspondants. La valeur du registre de pointeur 41 permet de connaître le positionnement du début de la méga-trame suivante, à savoir la super-trame d'indice M+1 sur la figure 3A, et la super-trame d'indice K+1 sur la figure 3B.

Le signal 1PPS régénéré à partir de la signalisation MIP est désigné par MIP_1PPS 46. A l'instant exact du début de la super trame 50 donné par la valeur du pointeur (grâce à un compteur 51 de détection de début de la super-trame), le compteur MIP_1PPS 43 est initialisé à la valeur 1-STS 44. Ce compteur modulo 10⁷ est décrémenté au rythme de l'horloge 10MHz 45. Lorsque le compteur est égal à 0, le signal MIP_1PPS 46 est mis à l'état 1. Ce front montant peut être comparé 48 au signal de référence GPS_1PPS 47. Si les signaux sont parfaitement synchronisés, l'écart entre les deux fronts est constant et égal au délai apporté par l'émetteur qui peut être réglé. Ce retard peut être nul si l'émetteur n'apporte aucun retard supplémentaire après l'étage de synchronisation 101 et 111, ou compensé lors du calcul de resynchronisation. Sur la base de cette architecture, on peut aussi connaître le retard apporté par l'émetteur en mémorisant 49 la valeur du compteur MIP_1PPS sur le front montant du signal GPS_1PPS. La valeur ainsi mémorisée est égale à Delay_emet et doit demeurer constante.

Une variation de cette mesure traduirait une instabilité de l'émetteur secondaire dans le temps, ou bien de la référence temporelle 15, 105 ou 115. On peut afficher une alarme si cette variation dépasse une tolérance fixée au préalable ou une valeur maximum instantanée prédéterminée.

## Revendications

1. Procédé pour assurer le synchronisme dans un réseau de diffusion comprenant au moins deux émetteurs distincts (10, 11),
lesdites données étant organisées en trames de données successives construites à partir d'un premier signal de référence temporelle externe, dit premier signal de référence externe (15, 105, 115),
**caractérisé en ce qu'**il met en oeuvre, au niveau de l'un au moins desdits émetteurs (10, 11), des étapes de :
- détection de synchronisation de paquet (31), délivrant un signal de synchronisation (33) ;
- génération d'un signal de référence (46) reconstitué à partir d'au moins certaines données desdites trames à émettre et dudit signal de synchronisation ;
- comparaison (48) dudit signal de référence reconstitué et d'un second signal de référence temporelle externe (205, 47), afin de déterminer (49) une valeur de décalage temporel entre ledit signal de référence reconstitué et ledit second signal de référence externe ;
- vérification que ladite valeur de décalage temporel déterminée est sensiblement égale à une valeur de décalage temporel prédéterminée imposée pour ledit émetteur, ladite valeur de décalage temporel prédéterminée étant sensiblement égale pour au moins deux émetteurs (10, 11) dudit réseau, de façon à assurer le synchronisme desdits émetteurs,
lesdites trames de données étant organisées, au sein d'un flux de type MPEG-TS, en au moins une super-trame, chaque super-trame comprenant un paquet d'initialisation de super-trame, ladite détection de synchronisation de paquet étant réalisée à partir d'un flux de données DATA TS (30) et d'une horloge de paquet TS (32) dudit flux de type MPEG-TS, ledit signal de synchronisation étant généré à partir d'au moins un paramètre dudit paquet d'initialisation de super-trame.

2. Procédé de diffusion selon la revendication 1, **caractérisé en ce que** ledit réseau de diffusion est un réseau de type SFN, dans lequel chacun desdits émetteurs (10, 11) utilise une même fréquence d'émission desdites données.

3. Procédé de diffusion selon la revendication 1 ou 2, **caractérisé en ce que** ledit premier (15, 105, 115) et/ou second (205) signal de référence externe est un signal comprenant une impulsion par seconde.

4. Procédé de diffusion selon la revendication 3, **caractérisé en ce que** ledit premier (15, 105, 115) et/ou second (205) signal de référence externe comprenant une impulsion par seconde est issu du système de positionnement mondial GPS.

5. Procédé de diffusion selon l'une quelconque des revendications 1 à 4, **caractérisé en ce qu'**il comprend une étape d'émission d'une alarme si, lors de ladite étape de vérification, on détermine que ladite valeur de décalage temporel déterminée n'est pas sensiblement égale à ladite valeur de décalage temporel de référence.

6. Procédé de diffusion selon l'une quelconque des revendications 1 à 5, **caractérisé en ce que** lesdits premier et second signaux de référence externes sont distincts, et **en ce que** ladite étape de vérification permet de détecter une dérive temporelle dudit premier signal de référence externe par rapport audit second signal de référence externe.

7. Procédé de diffusion selon l'une quelconque des revendications 1 à 6, **caractérisé en ce que** ledit réseau de diffusion est un réseau de type DVB-T.

8. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour la mise en oeuvre d'au moins une étape du procédé de diffusion selon l'une quelconque des revendications 1 à 7.

9. Emetteur de données dans un réseau de diffusion comprenant au moins deux émetteurs distincts (10, 11),
lesdites données étant organisées en trames de données successives construites à partir d'un premier signal de référence temporelle externe, dit premier signal de référence externe (10, 105, 115),
**caractérisé en ce qu'**il comprend :
- des moyens de détection de synchronisation de paquet (31), délivrant un signal de synchronisation (33) ;
- des moyens de génération d'un signal de référence (46) reconstitué à partir d'au moins certaines données desdites trames à émettre et dudit signal de synchronisation ;
- des moyens de comparaison (48) dudit signal de référence reconstitué et d'un second signal de référence externe (205, 47), afin de déterminer (49) une valeur de décalage temporel entre ledit signal de référence reconstitué et ledit second signal de référence externe ;
- des moyens de vérification que ladite valeur de décalage temporel déterminée est sensiblement égale à une valeur de décalage temporel prédéterminée imposée pour ledit émetteur, ladite valeur de décalage temporel prédéterminée étant sensiblement égale pour au moins deux émetteurs (10, 11) dudit réseau, de façon à assurer le synchronisme desdits émetteurs,
lesdites trames de données étant organisées, au sein d'un flux de type MPEG-TS, en au moins une super-trame, chaque super-trame comprenant un paquet d'initialisation de super-trame, ladite détection de synchronisation de paquet étant réalisée à partir d'un flux de données DATA TS (30) et d'une horloge de paquet TS (32) dudit flux de type MPEG-TS, ledit signal de synchronisation étant généré à partir d'au moins un paramètre dudit paquet d'initialisation de super-trame.

10. Système de diffusion de données mettant en oeuvre un réseau de diffusion comprenant au moins deux émetteurs distincts (10, 11),
lesdites données étant organisées en trames de données successives construites à partir d'un premier signal de référence temporelle externe, dit premier signal de référence externe (15, 105, 115),
**caractérisé en ce qu'**il comprend, au niveau de chacun desdits émetteurs (10, 11), des moyens de :
- détection de de synchronisation de paquet (31), délivrant un signal de synchronisation (33) ;
- génération d'un signal de référence (46) reconstitué à partir d'au moins certaines données desdites trames à émettre et dudit signal de synchronisation ;
- comparaison (48) dudit signal de référence reconstitué et d'un second signal de référence externe (205, 47), afin de déterminer (49) une valeur de décalage temporel entre ledit signal de référence reconstitué et ledit second signal de référence externe ;
- vérification que ladite valeur de décalage temporel déterminée est sensiblement égale à une valeur de décalage temporel prédéterminée imposée pour ledit émetteur, ladite valeur de décalage temporel prédéterminée étant sensiblement égale pour au moins deux émetteurs (10, 11) dudit réseau, de façon à assurer le synchronisme desdits émetteurs,
de façon à assurer une synchronisation et/ou un déphasage prédéterminés desdits émetteurs (10, 11) dans ledit système de diffusion,
lesdites trames de données étant organisées, au sein d'un flux de type MPEG-TS, en au moins une super-trame, chaque super-trame comprenant un paquet d'initialisation de super-trame, ladite détection de synchronisation de paquet étant réalisée à partir d'un flux de données DATA TS (30) et d'une horloge de paquet TS (32) dudit flux de type MPEG-TS, ledit signal de synchronisation étant généré à partir d'au moins un paramètre dudit paquet d'initialisation de super-trame.

## Patentansprüche

1. Verfahren zum Sicherstellen der Synchronität in einem Diffusionsnetz, umfassend mindestens zwei verschiedene Sender (10, 11),
wobei die Daten in Rahmen aufeinanderfolgender Daten organisiert werden, die aus einem ersten externen Referenzzeitsignal, das als erstes externes Referenzsignal (15, 105, 115) bezeichnet wird, gebildet werden,
**dadurch gekennzeichnet, dass** dieses, auf der Ebene mindestens des einen der Sender (10, 11), die Schritte durchführt:
- Detektion einer Paketsynchronisation (31), die ein Synchronisationssignal (33) liefert;
- Generierung eines Referenzsignals (46), das aus mindestens bestimmten Daten der zu sendenden Rahmen und des Synchronisationssignals rekonstituiert wird;
- Vergleich (48) des rekonstituierten Referenzsignals und eines zweiten externen Referenzzeitsignals (205, 47), um einen Zeitversetzungswert zwischen dem rekonstituierten Referenzsignal und dem zweiten externen Referenzsignal zu bestimmen (49);
- Verifikation, dass der bestimmte Zeitversetzungswert im Wesentlichen gleich ist einem vorherbestimmten Zeitversetzungswert, der an den Sender angelegt wird, wobei der vorherbestimmte Zeitversetzungswert im Wesentlichen gleich ist für mindestens zwei Sender (10, 11) des Netzes, um die Synchronität der Sender sicherzustellen,
wobei die Datenrahmen, im Inneren eines Stroms des Typs MPEG-TS, in mindestens einem Superrahmen organisiert werden, wobei jeder Superrahmen ein Superrahmen-Initialisierungspaket umfasst, wobei die Detektion der Paketsynchronisation aus einem Datenstrom DATA TS (30) und aus einem Paketzeitgeber TS (32) des Stroms des Typs MPEG-TS erfolgt, wobei das Synchronisationssignal aus mindestens einem Parameter des Superrahmen-Initialisierungspakets generiert wird.

2. Diffusionsverfahren nach Anspruch 1, **dadurch gekennzeichnet, dass** das Diffusionsnetz ein Netz des Typs SFN ist, wobei jeder der Sender (10, 11) dieselbe Sendefrequenz der Daten verwendet.

3. Diffusionsverfahren nach Anspruch 1 oder 2, **dadurch gekennzeichnet, dass** das erste (15, 105, 115) und/oder zweite (205) externe Referenzsignal ein Signal ist, das einen Impuls pro Sekunde umfasst.

4. Diffusionsverfahren nach Anspruch 3, **dadurch gekennzeichnet, dass** das erste (15, 105, 115) und/oder zweite (205) externe Referenzsignal, das einen Impuls pro Sekunde umfasst, von dem Global Positioning System GPS ausgegeben wird.

5. Diffusionsverfahren nach einem der Ansprüche 1 bis 4, **dadurch gekennzeichnet, dass** dieses einen Schritt des Sendens eines Alarms umfasst, wenn, in dem Verifikationsschritt, bestimmt wird, dass der Zeitversetzungswert nicht im Wesentlichen gleich ist dem Referenzzeitversetzungswert.

6. Diffusionsverfahren nach einem der Ansprüche 1 bis 5, **dadurch gekennzeichnet, dass** das erste und zweite externe Referenzsignal verschieden sind, und dadurch, dass es der Verifikationsschritt ermöglicht, eine Zeitabweichung des ersten externen Referenzsignals in Bezug auf das zweite externe Referenzsignal zu detektieren.

7. Diffusionsverfahren nach einem der Ansprüche 1 bis 6, **dadurch gekennzeichnet, dass** das Diffusionsnetz ein Netz des Typs DVB-T ist.

8. Computerprogrammprodukt, welches von einem Kommunikationsnetz heruntergeladen werden kann und/oder auf einem computerlesbaren Medium gespeichert werden kann und/oder von einem Mikroprozessor ausgeführt werden kann, **dadurch gekennzeichnet, dass** dieses Programmcodeinstruktionen umfasst, um mindestens einen Schritt des Diffusionsverfahrens nach einem der Ansprüche 1 bis 7 durchzuführen.

9. Sender von Daten in einem Diffusionsnetz, umfassend mindestens zwei verschiedene Sender (10, 11),
wobei die Daten in Rahmen aufeinanderfolgender Daten organisiert werden, die aus einem ersten externen Referenzzeitsignal, das als erstes externes Referenzsignal (15, 105, 115) bezeichnet wird, gebildet werden,
**dadurch gekennzeichnet, dass** dieser umfasst:
- Mittel für die Detektion einer Paketsynchronisation (31), die ein Synchronisationssignal (33) liefert;
- Mittel für die Generierung eines Referenzsignals (46), das aus mindestens bestimmten Daten der zu sendenden Rahmen und des Synchronisationssignals rekonstituiert wird;
- Mittel für den Vergleich (48) des rekonstituierten Referenzsignals und eines zweiten externen Referenzsignals (205, 47), um einen Zeitversetzungswert zwischen dem rekonstituierten Referenzsignal und dem zweiten externen Referenzsignal zu bestimmen (49);
- Mittel für die Verifikation, dass der bestimmte Zeitversetzungswert im Wesentlichen gleich ist einem vorherbestimmten Zeitversetzungswert, der an den Sender angelegt wird, wobei der vorherbestimmte Zeitversetzungswert im Wesentlichen gleich ist für mindestens zwei Sender (10, 11) des Netzes, um die Synchronität der Sender sicherzustellen,
wobei die Datenrahmen, im Inneren eines Stroms des Typs MPEG-TS, in mindestens einem Superrahmen organisiert werden, wobei jeder Superrahmen ein Superrahmen-Initialisierungspaket umfasst, wobei die Detektion der Paketsynchronisation aus einem Datenstrom DATA TS (30) und aus einem Paketzeitgeber TS (32) des Stroms des Typs MPEG-TS erfolgt, wobei das Synchronisationssignal aus mindestens einem Parameter des Superrahmen-Initialisierungspakets generiert wird.

10. Datendiffusionssystem, welches ein Diffusionsnetz verwendet, das mindestens zwei verschiedene Sender (10, 11) umfasst,
wobei die Daten in Rahmen aufeinanderfolgender Daten organisiert werden, die aus einem ersten externen Referenzzeitsignal, das als erstes externes Referenzsignal (15, 105, 115) bezeichnet wird, gebildet werden,
**dadurch gekennzeichnet, dass** dieses, auf der Ebene jedes der Sender (10, 11), Mittel umfasst für:
- die Detektion einer Paketsynchronisation (31), die ein Synchronisationssignal (33) liefert;
- die Generierung eines Referenzsignals (46), das aus mindestens bestimmten Daten der zu sendenden Rahmen und des Synchronisationssignals rekonstituiert wird;
- den Vergleich (48) des rekonstituierten Referenzsignals und eines zweiten externen Referenzsignals (205, 47), um einen Zeitversetzungswert zwischen dem rekonstituierten Referenzsignal und dem zweiten externen Referenzsignal zu bestimmen (49);
- die Verifikation, dass der bestimmte Zeitversetzungswert im Wesentlichen gleich ist einem vorherbestimmten Zeitversetzungswert, der an den Sender angelegt wird, wobei der vorherbestimmte Zeitversetzungswert im Wesentlichen gleich ist für mindestens zwei Sender (10, 11) des Netzes, um die Synchronität der Sender sicherzustellen,
um eine vorherbestimmte Synchronisation und/oder Phasendifferenz der Sender (10, 11) in dem Diffusionsnetz sicherzustellen,
wobei die Datenrahmen, im Inneren eines Stroms des Typs MPEG-TS, in mindestens einem Superrahmen organisiert werden, wobei jeder Superrahmen ein Superrahmen-Initialisierungspaket umfasst, wobei die Detektion der Paketsynchronisation aus einem Datenstrom DATA TS (30) und aus einem Paketzeitgeber TS (32) des Stroms des Typs MPEG-TS erfolgt, wobei das Synchronisationssignal aus mindestens einem Parameter des Superrahmen-Initialisierungspakets generiert wird.

## Claims

1. Method for ensuring synchronism in a broadcasting network comprising at least two different transmitters (10, 11), said data being organised, within successive data frames constructed on the basis of a first external time reference signal, referred to as a first external reference signal (15, 105, 115), **characterised in that** it implements, at at least one of said transmitters (10, 11), steps of:
- detecting packet synchronisation (31), delivering a synchronisation signal (33);
- generating a reference signal (46) reconstituted on the basis of at least some data from said frames to be transmitted and said synchronisation signal;
- comparing (48) said reconstructed reference signal and a second external time reference signal (205, 47) to determine (49) a time offset value between said reconstructed reference signal and said second external reference signal;
- verifying that said determined time offset value is substantially equal to a predetermined time offset value imposed for said transmitter, said predetermined time offset value being substantially equal for at least two transmitters (10, 11) of said network, so as to ensure the synchronism of said transmitters,
said data frames being organised, within an MPEG-TS stream type, in at least one super-frame, each super-frame comprising a super-frame initialisation packet, said packet synchronisation detection being carried out on the basis of a data stream DATA TS (30) and a packet clock TS (32) of said stream of the MPEG-TS type, said synchronisation signal being generated on the basis of at least one parameter of said super-frame initialisation packet.

2. Broadcasting method according to claim 1, **characterised in that** said broadcasting network is an SFN type network, wherein each of said transmitters (10, 11) uses a same frequency for transmitting said data.

3. Broadcasting method according to claim 1 or 2, **characterised in that** said first (15, 105, 115) and/or second (205) external reference signal is a signal comprising one pulse per second.

4. Broadcasting method according to claim 3, **characterised in that** said first (15, 105, 115) and/or second (205) external reference signal is a signal comprising one pulse per second, originating from the GPS global positioning system.

5. Broadcasting method according to any one of claims 1 to 4, **characterised in that** it comprises an alarm emitting step if, during said verifying step, it is determined that said determined time offset value is not substantially equal to said reference time offset value.

6. Broadcasting method according to any one of claims 1 to 5, **characterised in that** said first and second external reference signals are different, and **in that** said verifying step allows detection of a time drift of said first external reference signal with respect to said second external reference signal.

7. Broadcasting method according to any one of claims 1 to 6, **characterised in that** said broadcast network is a DVB-T type network.

8. Computer program product downloadable from a communications network and/or stored on a computer-readable medium and/or executable by a microprocessor, **characterised in that** it comprises program code instructions for the implementation of at least one step of the broadcasting method according to any one of claims 1 to 7.

9. Data transmitter in a transmission network comprising at least two different transmitters (10, 11), said data being organised within successive data frames constructed from a first external time reference signal, referred to as a first external reference signal (10, 105, 115), **characterised in that** it comprises:
- means for detecting packet synchronisation (31), delivering a synchronisation signal (33);
- means for generating a reference signal (46) reconstituted on the basis of at least some data from said frames to be transmitted and said synchronisation signal;
- means for comparing (48) said reconstructed reference signal and a second external time reference signal (205, 47) to determine (49) a time offset value between said reconstructed reference signal and said second external reference signal;
- means for verifying that said determined time offset value is substantially equal to a predetermined time offset value imposed for said transmitter, said predetermined time offset value being substantially equal for at least two transmitters (10, 11) of said network, so as to ensure the synchronism of said transmitters,
said data frames being organised, within an MPEG-TS stream type, in at least one super-frame, each super-frame comprising a super-frame initialisation packet, said packet synchronisation detection being carried out on the basis of a data stream DATA TS (30) and a packet clock TS (32) of said stream of the MPEG-TS type, said synchronisation signal being generated on the basis of at least one parameter of said super-frame initialisation packet.

10. Data broadcasting system implementing a broadcast network comprising at least two different transmitters (10, 11), said data being organised within successive data frames constructed from a first external time reference signal, referred to as a first external reference signal (15, 105, 115), **characterised in that** it comprises, at at least one of said transmitters (10, 11), means for:
- detecting packet synchronisation (31), delivering a synchronisation signal (33);
- generating a reference signal (46) reconstituted on the basis of at least some data from said frames to be transmitted and said synchronisation signal;
- comparing (48) said reconstructed reference signal and a second external time reference signal (205, 47) to determine (49) a time offset value between said reconstructed reference signal and said second external reference signal;
- verifying that said determined time offset value is substantially equal to a predetermined time offset value imposed for said transmitter, said predetermined time offset value being substantially equal for at least two transmitters (10, 11) of said network, so as to ensure the synchronism of said transmitters,
so as to ensure a predetermined synchronisation and/or offset of said transmitters (10, 11) in said broadcast system, said data frames being organised, within an MPEG-TS type stream, in at least one super-frame, each super-frame comprising a super-frame initialisation packet, said packet synchronisation detection being carried out on the basis of a data stream DATA TS (30) and a packet clock TS (32) of said stream of the MPEG-TS type, said synchronisation signal being generated on the basis of at least one parameter of said super-frame initialisation packet.
